# EUROPEAN PATENT SPECIFICATION

(11) **EP 3 582 024 B1**
(45) Date of publication and mention of the grant of the patent: **11.11.2020**
(21) Application number: 19175945.5
(22) Date of filing: 22.05.2019
(51) Int. Cl.: G03G 15/00

(54) **IMAGE FORMING APPARATUS AND PROGRAM**
BILDERZEUGUNGSVORRICHTUNG UND -PROGRAMM
APPAREIL ET PROGRAMME DE FORMATION D'IMAGES

(30) Priority: 24.05.2018 JP 2018099314
(43) Date of publication of application: 18.12.2019
(73) Proprietor: KONICA MINOLTA, INC., Tokyo 100-7015 (JP)
(72) Inventor: Ishikawa, Tetsuya, Tokyo, 100-7015 (JP); Minegishi, Natsuko, Tokyo, 100-7015 (JP); Yuasa, Kei, Tokyo, 100-7015 (JP); Shibata, Hiroki, Tokyo, 100-7015 (JP)
(74) Representative: Hoffmann Eitle

(56) References cited:
- US-A1- 2005 117 928

## Description

### BACKGROUND

### 1. Technological field

The present invention relates to an image forming apparatus and a program.

### 2. Description of the Related Art

An electrophotographic image forming apparatus is known to have horizontal and vertical streaks on formed images with long-term use. When such defects occur, components related to image forming (image forming components) are replaced.

Various technologies to let a user(s) know a replacement timing of each image forming component in advance have been investigated and proposed, such as a technology which allows a user(s) to determine the replacement timing on the basis of a life indicating value(s) calculated from the number of formed images or from a driven distance of a belt, and a technology which obtains a capability value(s) related to the life of a photoreceptor, and predicts the remaining life of the photoreceptor therefrom (for example, disclosed in JP 2016-145915 A).

However, even if the replacement timing of each image forming component is predicted in advance, in actual cases, a user(s) tends to keep using the image forming components until the defects occur in order to reduce downtime of the image forming apparatus.

Because timings when the defects occur are unpredictable, and also a desired image quality level varies from user to user, it is difficult to predict the replacement timing which is suitable for such cases/use. For example, the technology disclosed in JP 2016-145915 A predicts the replacement timing on the basis of the capability value only, and cannot determine whether or not the user accepts images of the time when the replacement timing arrives.

Furthermore, if the defects occur suddenly, the user needs to call a technician, which may lead to the downtime longer than that in the case of replacing an image forming component at its predicted replacement timing.

US 2005/0117928 A1 relates to an image forming apparatus including at least one image forming unit comprising an image bearing member bearing a latent image and a developing device configured to develop the latent image with a developer including a toner to form a toner image thereon. An intermediate transfer may be provided and configured to receive the toner image from the image bearing member and a transfer device is configured to transfer the toner image to a receiving material. Further, an image pattern measuring device and an image quality predicting device may be provided.

### SUMMARY

Objects of the present invention include providing an image forming apparatus and a program which allow a user(s) to determine the replacement timing of each image forming component suitable for the image quality level that the user(s) desires.

In order to achieve at least one of the abovementioned objects, according to a first aspect of the present invention, there is provided an image forming apparatus including: an output device; an information obtaining unit which obtains estimated deterioration information on an estimated degree of deterioration of image quality of an image; an image data generator which, based on the estimated deterioration information obtained by the information obtaining unit, generates, from arbitrary image data, image data of a future image having a predicted image quality; and an image output controller which causes the output device to output the future image based on the image data of the future image generated by the image data generator.

According to a second aspect of the present invention, there is provided a program to cause a computer to function as: an information obtaining unit which obtains estimated deterioration information on an estimated degree of deterioration of image quality of an image; an image data generator which, based on the estimated deterioration information obtained by the information obtaining unit, generates, from arbitrary image data, image data of a future image having a predicted image quality; and an image output controller which causes an output device to output the future image based on the image data of the future image generated by the image data generator.

### BRIEF DESCRIPTION OF THE DRAWINGS

The advantages and features provided by one or more embodiments of the present invention will become more fully understood from the detailed description given hereinbelow and the appended drawings which are given by way of illustration only, and thus are not intended as a definition of the limits of the present invention, wherein:
FIG. 1 is a schematic diagram of an image forming apparatus;
FIG. 2 is a block diagram showing functional configuration of the image forming apparatus;
FIG. 3 is a flowchart showing a data acquisition process;
FIG. 4A is an example of a data table;
FIG. 4B is an example of a data table;
FIG. 5A is an example of a data table;
FIG. 5B is an example of a data table;
FIG. 6 is an example of a data table;
FIG. 7 is a flowchart showing a future image output process;
FIG. 8 is an example of a graph in which, about a frequency, power spectrum values are plotted with respect to the numbers of formed images;
FIG. 9 is an example of a graph in which, about a main-scanning-direction position, luminosity values are plotted with respect to the numbers of formed images;
FIG. 10A is an example of data for explaining a modification;
FIG. 10B is an example of data for explaining the modification;
FIG. 10C is an example of data for explaining the modification; and
FIG. 11 is an example of data for explaining the modification.

### DETAILED DESCRIPTION OF EMBODIMENTS

Hereinafter, one or more embodiments of the present invention will be described with reference to the drawings. However, the scope of the present invention is not limited to the disclosed embodiments.

### [Configuration of Image Forming Apparatus]

First, configuration of an image forming apparatus according to this embodiment is described.

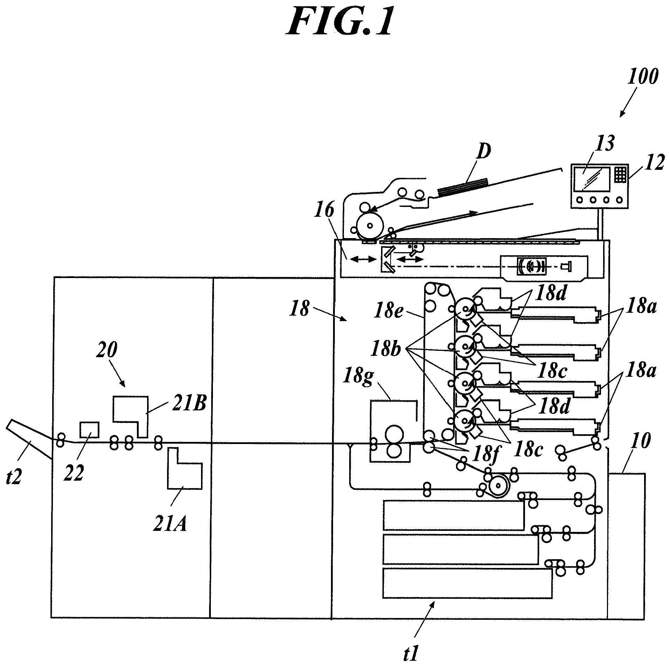

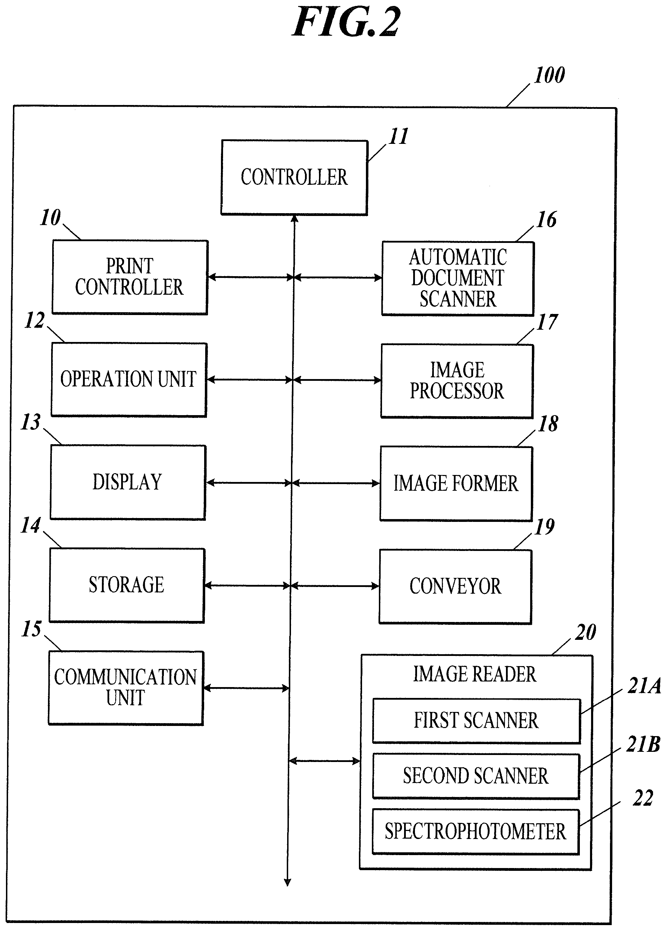

FIG. 1 is a schematic diagram of an image forming apparatus 100 according to this embodiment. FIG. 2 is a block diagram showing functional configuration of the image forming apparatus 100.

As shown in FIG. 1 and FIG. 2, the image forming apparatus 100 includes a print controller 10, a controller 11 (information obtaining unit, image data generator, image output controller), an operation unit 12, a display 13, a storage 14, a communication unit 15, an automatic document scanner 16, an image processor 17 (image data generator), an image former 18, a conveyor 19, and an image reader 20.

The print controller 10 receives PDL (Page Description Language) data from a computer terminal(s) on a communication network, and rasterizes the PDL data to generate image data in a bitmap format.

The print controller 10 generates the image data for respective colors of C (cyan), M (magenta), Y (yellow), and K (black).

The controller 11 includes a CPU (Central Processing Unit) and a RAM (Random Access Memory). The controller 11 reads a program(s) stored in the storage 14, and controls each component of the image forming apparatus 100 in accordance with the program(s).

The operation unit 12 includes operation keys and/or a touchscreen provided integrally with the display 13, and outputs operation signals corresponding to operations thereon to the controller 11. A user(s) inputs instructions, for example, to set jobs and to change processing details with the operation unit 12.

The display 13 is a display, such as an LCD, and displays various screens (windows) in accordance with instructions of the controller 11.

The storage 14 stores programs, files and the like which are readable by the controller 11. A storage medium, such as a hard disk or a ROM (Read Only Memory), may be used as the storage 14.

The communication unit 15 communicates with, for example, computers and other image forming apparatuses on a communication network in accordance with instructions of the controller 11.

The automatic document scanner 16 optically scans a document D which is placed on a document tray and conveyed by a conveyor mechanism, thereby reading the image of the document D by forming, on the light receiving face of a CCD (Charge Coupled Device) sensor, an image of the reflected light from the document D, and generating image data for respective colors of R (red), G (green), and B (blue), and then outputs the data to the image processor 17.

The image processor 17 corrects and performs image processing on the image data input from the automatic document scanner 16 or from the print controller 10, and outputs the data to the image former 18. Examples of the image processing include level correction, enlargement/reduction, brightness/contrast adjustment, sharpness adjustment, smoothing, color conversion, tone curve adjustment, and filtering.

The image former 18 forms an image on paper on the basis of the image data output from the image processor 17.

As shown in FIG. 1, the image former 18 includes four sets of an exposure device 18a, a photoconductive drum 18b, a charger 18c, and a developing device 18d, for respective colors of C, M, Y, and K. The image former 18 also includes an intermediate transfer belt 18e, secondary transfer rollers 18f, and a fixing device 18g.

The exposure device 18a includes LDs (Laser Diodes) as light emitting elements. The exposure device 18a drives the LDs on the basis of the image data, and emits laser light onto the photoconductive drum 18b charged by the charger 18c, thereby exposing the photoconductive drum 18b. The developing device 18d supplies toner onto the photoconductive drum 18b with a charging developing roller, thereby developing an electrostatic latent image formed on the photoconductive drum 18b by the exposure.

The images thus formed with the respective colors of toner on the four photoconductive drums 18b are transferred to and superposed sequentially on the intermediate transfer belt 18e. Thus, a color image is formed on the intermediate transfer belt 18e. The intermediate transfer belt 18e is an endless belt wound around rollers, and rotates as the rollers rotate.

The secondary transfer rollers 18f transfer the color image on the intermediate transfer belt 18e onto paper fed from a paper feeding tray tl. The fixing device 18g heats and presses the image-formed paper, thereby fixing the color image to the paper.

The conveyor 19 includes a paper conveyance path equipped with pairs of conveying rollers. The conveyor 19 conveys paper in the paper feeding tray t1 to the image former 18, and conveys the paper on which the image has been formed by the image former 18 to the image reader 20, and then ejects the paper to a paper receiving tray t2.

The image reader 20 reads the image formed on the paper, and outputs the read data to the controller 11.

The image reader 20 includes a first scanner 21A, a second scanner 21B, and a spectrophotometer 22. The first scanner 21A, the second scanner 21B, and the spectrophotometer 22 are provided on the downstream side of the image former 18 along the paper conveyance path so that they can read, before the paper is ejected to the outside (paper receiving tray t2), the image-formed side(s) of the paper.

The first scanner 21A and the second scanner 21B are provided where the first scanner 21A and the second scanner 21B can read the back side and the front side of the paper being conveyed thereto, respectively.

The first scanner 21A and the second scanner 21B are each constituted of, for example, a line sensor which has CCDs (Charge Coupled Devices) arranged in line in a direction (paper width direction) which is orthogonal to the paper conveying direction and horizontal to the paper face. The first scanner 21A and the second scanner 21B are image readers which read an image(s) formed on paper being conveyed thereto, and output the read data to the controller 11 (shown in FIG. 2).

The spectrophotometer 22 detects spectral reflectance at each wavelength from the image formed on the paper, thereby measuring color(s) of the image. The spectrophotometer 22 can recognize color information highly precisely.

### [Operation of Image Forming Apparatus]

Next, operation of the image forming apparatus 100 according to this embodiment is described.

The image forming apparatus 100 allows the user to recognize the replacement timing of each image forming component by outputting an image having a quality predicted to be in the future (future image). More specifically, in order to output the future image, the image forming apparatus 100 performs a data acquisition process to periodically acquire and store noise information on a predetermined image and a future image output process to actually form the future image on paper or display the future image on the display 13.

### <Data Acquisition Process>

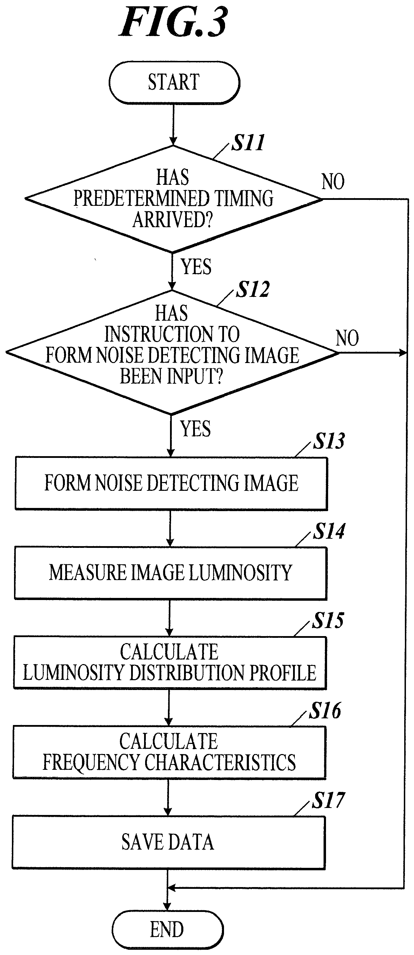

FIG. 3 is a flowchart showing the data acquisition process.

First, the controller 11 determines whether or not a predetermined timing has arrived (Step S11).

Examples of the predetermined timing include a timing when a predetermined number of images (e.g. 1,000 images) has been formed since the last data acquisition process, and a timing when the image forming apparatus 100 is turned on. The user can change the predetermined timing as desired.

When determining that the predetermined timing has not yet arrived (Step S11: NO), the controller 11 ends the data acquisition process.

On the other hand, when determining that the predetermined timing has arrived (Step S11: YES), the controller 11 determines whether or not an instruction to form an image for detecting image noise (noise detecting image) has been input (i.e., whether or not an instructing operation for making such an instruction has been performed; the same applies hereinafter) through the operation unit 12 (Step S12).

The noise detecting image is an image having a predetermined gradation (e.g. 50% density), and is set beforehand.

More specifically, the controller 11 displays a pop-up image (e.g. pop-up window) on the display 13 for the user to choose whether or not to form the noise detecting image, and in accordance with the user's choosing operation on the pop-up image through the operation unit 12, determines whether or not an instruction to form the noise detecting image has been input.

There (e.g. operation unit 12) maybe provided a switch which, in accordance with the user's operation on the switch, switches to or from a control mode in which the noise detecting image is automatically formed at the predetermined timing.

When determining that an instruction to form the noise detecting image has not been input (Step S12: NO), the controller 11 ends the data acquisition process.

On the other hand, when determining that an instruction to form the noise detecting image has been input (Step S12: YES), the controller 11 causes the image former 18 to form the noise detecting image on paper (Step S13).

Next, the controller 11 causes the image reader 20 to read the noise detecting image formed on the paper and measure luminosity of the image (Step S14).

More specifically, the controller 11 causes the spectrophotometer 22 to measure the luminosity (L*) of the noise detecting image on the paper. The luminosity is measured at a plurality of dots which are indicated by positions in the main scanning direction (main-scanning-direction positions) and positions in the sub-scanning direction (sub-scanning-direction positions). The read/measured data (luminosity values) is stored in a data table T1 in the storage 14.

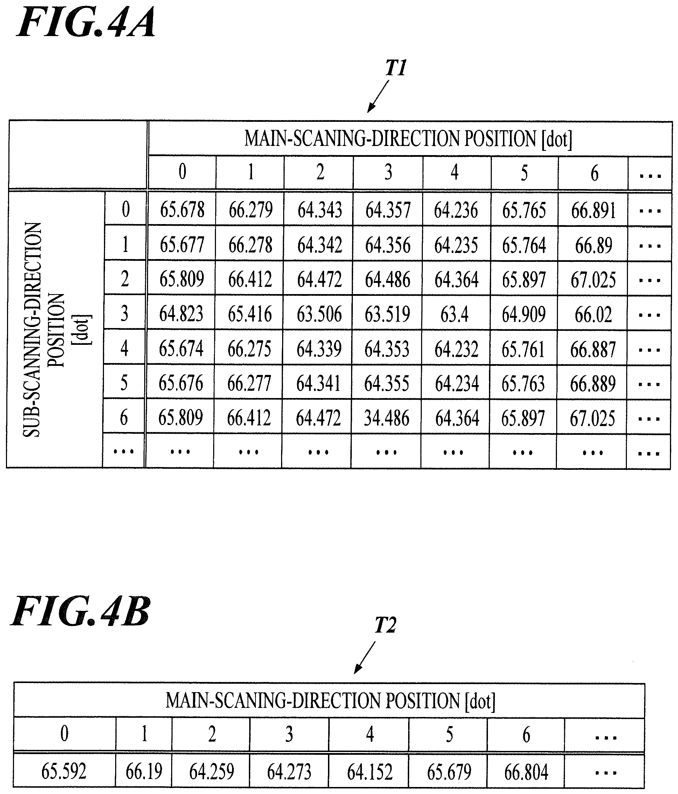

FIG. 4A shows an example of the data table T1.

As shown in FIG. 4A, the data table T1 stores the luminosity values (L*) measured at a plurality of dots each indicated by the main-scanning-dircction position and the sub-scanning-dircction position.

Next, the controller 11 calculates a luminosity distribution profile in the main scanning direction by averaging the read data, which is stored in the data table T1, in the sub-scanning direction (Step S15). The calculated data (luminosity distribution profile) is stored in a data table T2 in the storage 14.

FIG. 4B shows an example of the data table T2.

As shown in FIG. 4B, the data table T2 stores the data calculated by averaging the read data, which is stored in the data table T1, in the sub-scanning direction.

Additionally or alternatively, a luminosity distribution profile in the sub-scanning direction may be calculated by averaging the read data, which is stored in the data table T1, in the main scanning direction.

Next, the controller 11 calculates frequency characteristics of streaks by performing discrete Fourier transform on the calculated luminosity distribution profile (Step S16).

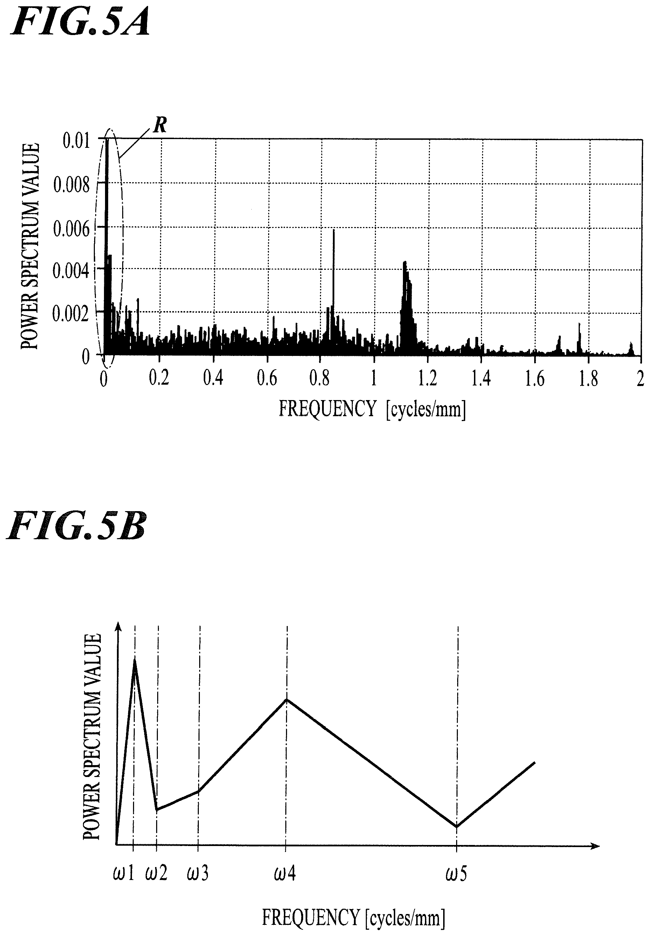

FIG. 5A shows an example of a graph of the calculated frequency characteristics (F(ω)(t0)). FIG. 5B shows an enlarged view of a region R in the graph of FIG. 5A.

Next, the controller 11 obtains power spectrum values with respect to frequencies [cycles/mm] from the calculated frequency characteristics, associates the obtained data with the date and the number of formed images at the time, stores (saves) the same in a data table T3 in the storage 14 (Step S17), and ends the data acquisition process.

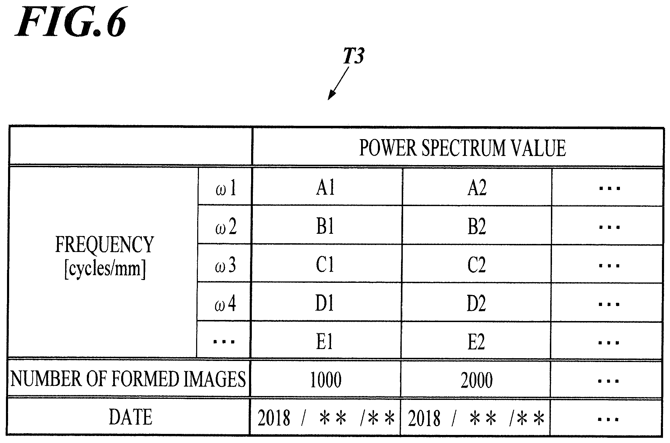

FIG. 6 shows an example of the data table T3.

As shown in FIG 6, the data table T3 stores, for respective frequencies (ω), the power spectrum values (noise information) associated with the date(s) and the number(s) of formed images.

The data acquisition process forms the noise detecting image at each predetermined timing, and consequently data is obtained and accumulated. Instead of the luminosity, density may be used.

### <Future Image Output Process>

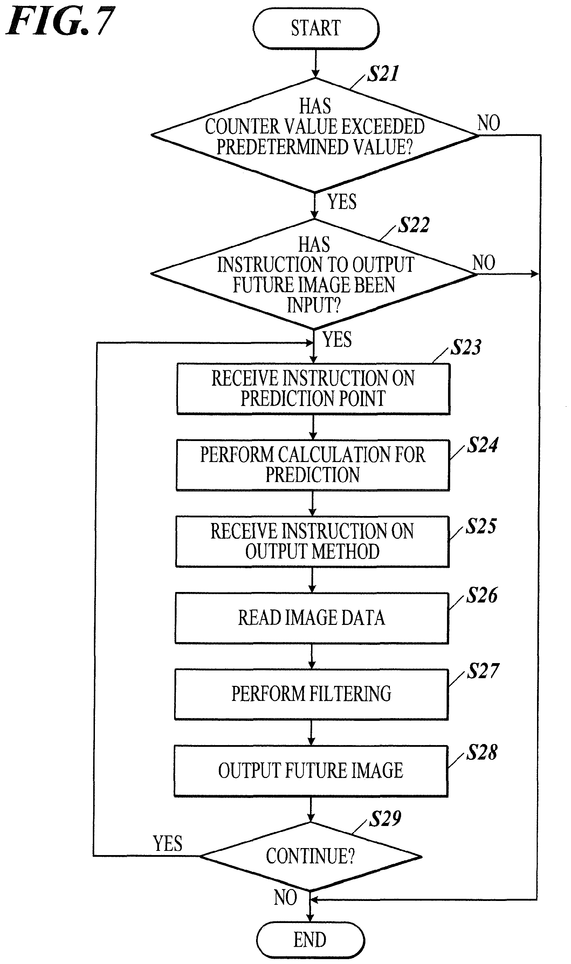

FIG. 7 is a flowchart showing the future image output process.

First, the controller 11 determines whether or not any of counter values of continuous use hours for the respective image forming components, such as the photoconductive drum(s), the charger(s) and the developing device(s), has exceeded its corresponding predetermined value (Step S21).

The predetermined value is set, for example, at 80% of predetermined maximum hours (life) of use.

Counter values for the transfer devices (intermediate transfer belt and secondary transfer rollers) and the fixing device may be included.

When determining that none of the counter values has exceeded their corresponding predetermined values (Step S21: NO), the controller 11 ends the future image output process.

On the other hand, when determining that at least one of the counter values has exceeded its (or their) corresponding predetermined value(s) (Step S21: YES), the controller 11 determines whether or not an instruction to output the future image has been input through the operation unit 12 (Step S22). When determining that an instruction to output the future image has not been input (Step S22: NO), the controller 11 ends the future image output process.

On the other hand, when determining that an instruction to output the future image has been input (Step S22: YES), the controller 11 receives an instruction on a point of time in the future to predict the image quality (prediction point: the number of images to be formed) through the operation unit 12 (Step S23).

More specifically, the controller 11 displays an input section (e.g. input window) on the display 13 for the user to enter/input the number of images to be formed, and in accordance with the user's input operation to the input section through the operation unit 12, receives an instruction on a point of time in the future to predict the image quality.

Next, the controller 11 performs calculation for prediction of frequency characteristics (Step S24).

More specifically, first, the controller 11 refers to the data table T3 stored in the storage 14 and, for each frequency, plots the power spectrum values with respect to the numbers of formed images, and then obtains an approximation straight line therefrom. Next, the controller 11 obtains a power spectrum value at the specified prediction point using the obtained approximation straight line. The power spectrum value at the prediction point is estimated deterioration information on an estimated degree of deterioration of image quality of an image.

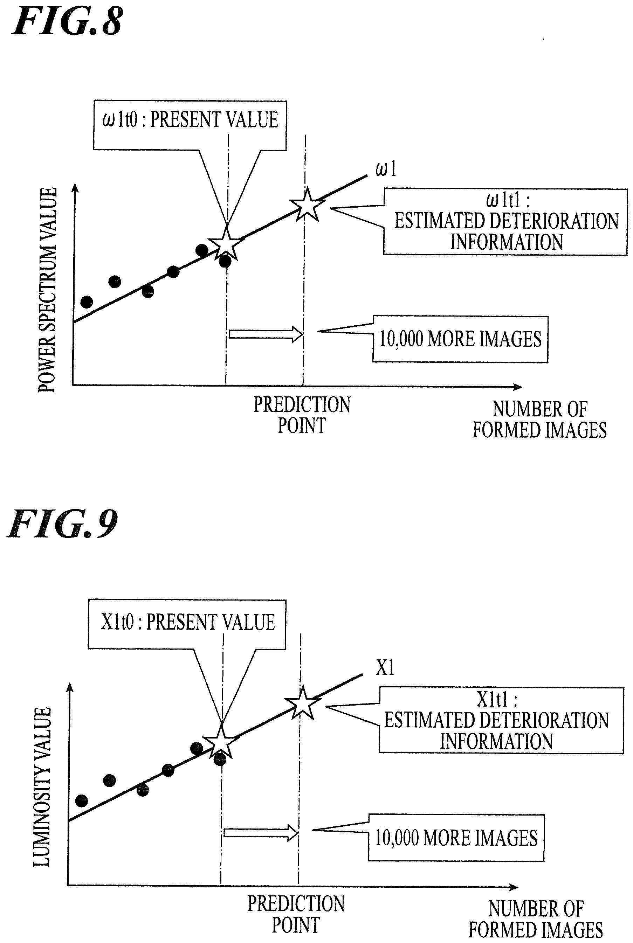

FIG. 8 is an example of a graph in which, about a frequency (ω1), the power spectrum values are plotted with respect to the numbers of formed images (images formed and images to be formed). The approximation straight line is represented by a solid line.

In the case shown in FIG. 8, the prediction point is set at when 10,000 more images are formed from the present point, and a power spectrum value at the prediction point (estimated deterioration information) is obtained.

Similarly, the controller 11 obtains power spectrum values at the prediction point about the other frequencies (ω2, ω3, ...).

Next, the controller 11 receives an instruction on an output method through the operation unit 12 (Step S25).

The output method is either forming an image on paper with the image former 18 or displaying an image on the display 13. The controller 11 displays a choice section (e.g. choice window) on the display 13 for the user to choose an output method, and in accordance with the user's choosing operation on the choice section, determines the output method.

Next, the controller 11 reads image data of an image to be output as the future image (Step S26). The image to be output by the future image output process may be any image, while it is preferable to always use the same image so as to make comparison easy considering that this future image output process is repeated.

Next, the controller 11 performs frequency filtering on the read image data with the image processor 17 (Step S27).

More specifically, to display an image on the display 13, the controller 11 performs F(co)(tl) filtering on the read image data.

Meanwhile, to form an image on paper, the controller 11 performs F(ω)(t1-t0) filtering on the read image data. In this case, where an image is formed on paper, the controller 11 performs the process which adds only the difference of F(ω)(t1-t0) because the image forming apparatus 100 at this point forms an image which already includes noise of F(ω)(t0).

Using the filtered image data, the controller 11 outputs the future image either by displaying the image on the display 13 or by forming the image on paper with the image former 18 (Step S28).

Next, the controller 11 determines whether or not an instruction to continue the future image output process has been input through the operation unit 12 (Step S29). When determining that an instruction to continue the future image output process has been input (Step S29: YES), the controller 11 returns to Step S23 to repeat Step S23 and the subsequent steps.

That is, when the controller 11 determines that an instruction to continue the future image output process has been input, the future image will be output at a different prediction point.

On the other hand, when determining that an instruction to continue the future image output process has not been input (Step S29: NO), the controller 11 ends the future image output process.

The future image output process outputs the future image of the user's desired timing (prediction point) on the basis of the data reflecting usage conditions of the image forming apparatus 100. Hence, the user can accurately recognize in advance until when his/her desired image quality will be maintained.

### [Advantageous Effects of Embodiments]

As described above, according to this embodiment, the controller 11 obtains estimated deterioration information on an estimated degree of deterioration of image quality of an image; with the image processor 17, on the basis of the obtained estimated deterioration information, generates, from arbitrary image data, image data of a future image having a predicted image quality; and causes an output device to output the future image on the basis of the generated image data of the future image.

This allows the user to check a future image quality with the output future image and determine the replacement timing of each image forming component in advance, the replacement timing being suitable for the user's desired image quality.

Furthermore, according to this embodiment, the image forming apparatus 100 includes the data tables T1, T2, and T3 (noise information storages in the storage 14) where noise information on a predetermined image is accumulated, wherein the controller 11 obtains the estimated deterioration information on the basis of the noise information accumulated in the data tables T1, T2, and T3.

Thus, the image forming apparatus 100 is configured to accumulate noise information in the data tables T1, T2, and T3, and obtain the estimated deterioration information by using the noise information.

Furthermore, according to this embodiment, the noise information is a frequency characteristic(s) of luminosity of the predetermined image in the main scanning direction or the sub-scanning direction.

Thus, the image forming apparatus 100 is configured to use, as the noise information, frequency characteristics of luminosity of the predetermined image in the main scanning direction or the sub-scanning direction.

Furthermore, according to this embodiment, the controller 11 generates the image data of the future image by performing, on the arbitrary image data, frequency filtering fit for the estimated deterioration information.

Thus, the image data of the future image can be generated from arbitrary image data.

Furthermore, according to this embodiment, the output device is the image former 18 which forms the future image on paper.

This allows the user to check the future image formed on paper.

Furthermore, according to this embodiment, the output device is the display 13 which displays the future image.

This allows the user to check the future image displayed on the display 13.

Furthermore, according to this embodiment, the image forming apparatus 100 includes the image reader 20 which reads the predetermined image, wherein the controller 11 obtains the noise information on the basis of read data obtained by the image reader 20 reading the predetermined image.

Thus, the image forming apparatus 100 is configured to obtain the noise information from the actually read and measured data.

### [First Modification]

In the above embodiment, the controller 11 uses the power spectrum values with respect to the frequencies [cycles/mm] (shown in the data table T3) to obtain the estimated deterioration information. Instead of the frequency characteristics, the controller 11 may use the luminosity distribution profile (shown in the data table T2) to output the future image. That is, the controller 11 may use the luminosity distribution profile as the noise information.

In this case, the controller 11 refers to the data table T2 stored in the storage 14 and, for each main-scanning-direction position, plots luminosity values with respect to the numbers of formed images, and then obtains an approximation straight line therefrom. The controller 11 determines/obtains a luminosity value at a specified prediction point using the obtained approximation straight line.

FIG. 9 is an example of a graph in which, about a main-scanning-direction position (X1), the luminosity values are plotted with respect to the numbers of formed images (images formed and images to be formed). The approximation straight line is represented by a solid line.

In the case shown in FIG. 9, the prediction point is set at when 10,000 more images are formed from the present point, and a luminosity value at the prediction point is obtained as the estimated deterioration information.

Similarly, the controller 11 obtains luminosity values at the prediction point about the other main-scanning-direction positions (X2, X3, ...).

To display an image on the display 13, the controller 11 performs γ (gamma) correction which adds the luminosity values at the respective main-scanning-direction positions, X1t1, X2t1, ..., to the image data to output.

Meanwhile, to form an image on paper, the controller 11 performs γ correction which adds the luminosity differences at the respective main-scanning-direction positions, X1t1 - X1t0, X2t1 - X2t0, ..., to the image data to output.

Thus, the future image is output as with the above embodiment.

### [Second Modification]

In the above embodiment, the data acquisition process is performed. Without the data acquisition process, known experimental data prepared beforehand may be used.

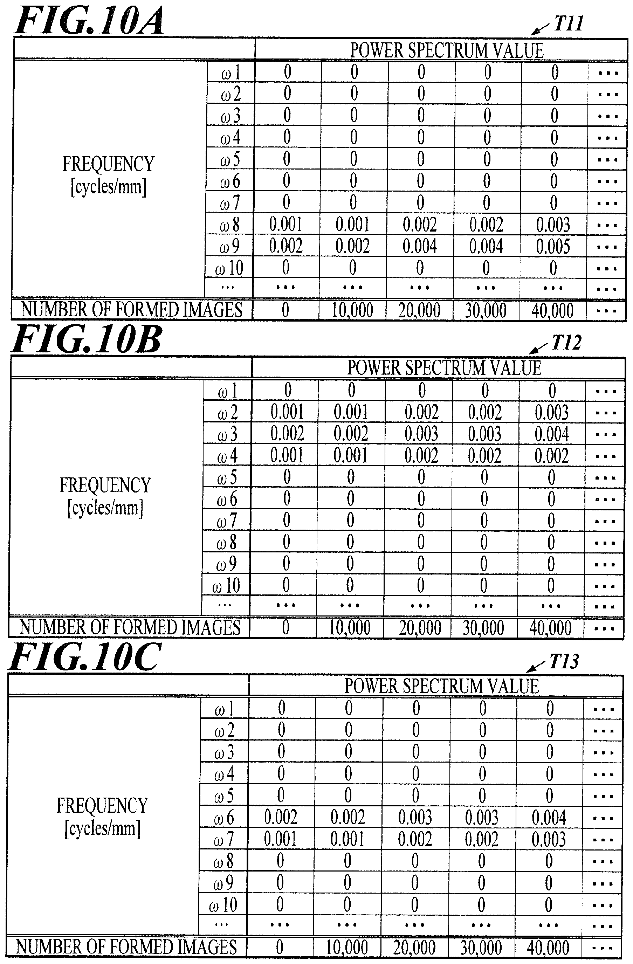

For example, FIG. 10A, FIG. 10B, and FIG 10C are a data table T11 for chargers, a data table T12 for developing devices, and a data table T13 for photoreceptors, respectively. The data tables T11, T12, and T13 (durability information storages) each store, for respective frequencies (ω), power spectrum values (durability information) obtained by simulation or the like and associated with the numbers of formed images. The data tables T11, T12, and T13 are stored in the storage 14.

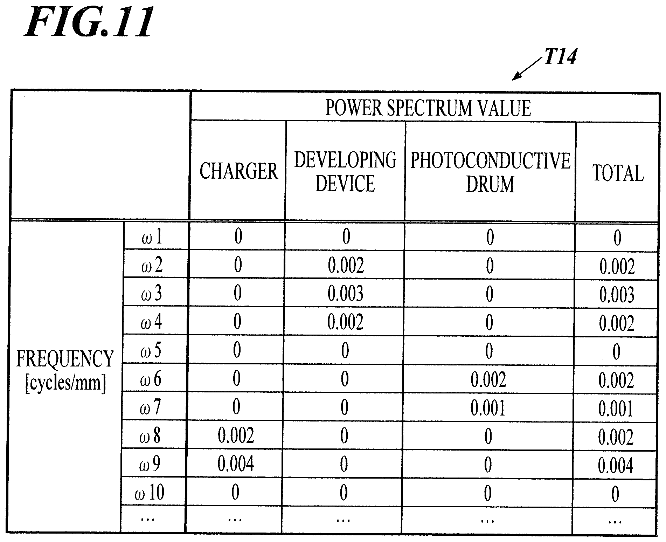

For example, to estimate the frequency characteristics with the charger 18c having 20,000 as the number of formed images, the developing device 18d having 30,000 as the number of formed images, and the photoconductive drum 18b having 10,000 as the number of formed images, the total value for each frequency is calculated as shown in FIG. 11 and used to obtain the estimated deterioration information.

Embodiments to which the present invention is applicable are not limited to the abovementioned embodiment(s) or modifications, and can be appropriately modified without departing from the scope of the present invention, as defined by the appended claims.

Although some embodiments of the present invention have been described and illustrated in detail, the disclosed embodiments are made for purposes of illustration and example only and not limitation. The scope of the present invention should be interpreted by terms of the appended claims.

## Claims

1. An image forming apparatus (100) comprising:
an output device (13, 18);
an information obtaining unit (11) which obtains estimated deterioration information on an estimated degree of deterioration of image quality of an image;
an image data generator (11, 17) which, based on the estimated deterioration information obtained by the information obtaining unit (11), generates, from arbitrary image data, image data of a future image having a predicted image quality; and
an image output controller (11) which causes the output device (13, 18) to output the future image based on the image data of the future image generated by the image data generator (11, 17).

2. The image forming apparatus (100) according to claim 1, comprising a noise information storage (14, T1, T2, T3) where noise information on a predetermined image is accumulated, wherein
the information obtaining unit (11) obtains the estimated deterioration information based on the noise information accumulated in the noise information storage (14, T1, T2, T3).

3. The image forming apparatus (100) according to claim 2, wherein the noise information is a frequency characteristic of luminosity of the predetermined image in a main scanning direction or a sub-scanning direction.

4. The image forming apparatus (100) according to claim 3, wherein the image data generator (11, 17) generates the image data of the future image by performing, on the arbitrary image data, frequency filtering fit for the estimated deterioration information.

5. The image forming apparatus (100) according to claim 2, wherein the noise information is a luminosity distribution profile of the predetermined image in a main scanning direction.

6. The image forming apparatus (100) according to claim 5, wherein the image data generator (11, 17) generates the image data of the future image by performing, on the arbitrary image data, gamma correction fit for a luminosity value as the estimated deterioration information.

7. The image forming apparatus (100) according to any one of claims 1 to 6, wherein the output device is an image former (18) which forms the future image on paper.

8. The image forming apparatus (100) according to any one of claims 1 to 6, wherein the output device is a display (13) which displays the future image.

9. The image forming apparatus (100) according to any one of claims 2 to 6, comprising an image reader (20) which reads the predetermined image, wherein
the information obtaining unit (11) obtains the noise information based on read data obtained by the image reader (20) reading the predetermined image.

10. The image forming apparatus (100) according to claim 1, comprising a durability information storage (14, T11, T12, T13) where durability information on a component related to image forming is stored, wherein
the information obtaining unit (11) obtains the estimated deterioration information based on the durability information stored in the durability information storage (14, T11, T12, T13).

11. A program to cause an image forming apparatus (100) to function as:
an information obtaining unit (11) which obtains estimated deterioration information on an estimated degree of deterioration of image quality of an image;
an image data generator (11, 17) which, based on the estimated deterioration information obtained by the information obtaining unit (11), generates, from arbitrary image data, image data of a future image having a predicted image quality; and
an image output controller (11) which causes an output device (13, 18) to output the future image based on the image data of the future image generated by the image data generator (11, 17).

## Patentansprüche

1. Bilderzeugungseinrichtung (100), umfassend:
eine Ausgabevorrichtung (13, 18);
eine Informationserlangungseinheit (11), die geschätzte Verschlechterungsinformationen über einen geschätzten Verschlechterungsgrad von Bildqualität eines Bildes erlangt;
einen Bilddatengenerator (11, 17), der, basierend auf den geschätzten Verschlechterungsinformationen, die durch die Informationserlangungseinheit (11) erlangt werden, aus beliebigen Bilddaten Bilddaten eines zukünftigen Bilds generiert, das eine vorhergesagte Bildqualität aufweist; und
eine Bildausgabesteuervorrichtung (11), die die Ausgabevorrichtung (13, 18) veranlasst, das zukünftige Bild basierend auf den Bilddaten des zukünftigen Bilds auszugeben, die durch den Bilddatengenerator (11, 17) generiert wurden.

2. Bilderzeugungseinrichtung (100) nach Anspruch 1, umfassend einen Rauschinformationsspeicher (14, T1, T2, T3), wo Rauschinformationen über ein vorbestimmtes Bild gesammelt werden, wobei
die Informationserlangungseinheit (11) die geschätzten Verschlechterungsinformationen basierend auf den Rauschinformationen erlangt, die in dem Rauschinformationsspeicher (14, T1, T2, T3) gespeichert sind.

3. Bilderzeugungseinrichtung (100) nach Anspruch 2, wobei die Rauschinformationen eine Frequenzkennlinie von Leuchtkraft des vorbestimmten Bilds in einer Hauptabtastrichtung oder einer Nebenabtastrichtung sind.

4. Bilderzeugungseinrichtung (100) nach Anspruch 3, wobei der Bilddatengenerator (11, 17) die Bilddaten des zukünftigen Bilds durch Durchführen, an den beliebigen Bilddaten, einer Frequenzfilteranpassung für die geschätzten Verschlechterungsinformationen generiert.

5. Bilderzeugungseinrichtung (100) nach Anspruch 2, wobei die Rauschinformationen ein Leuchtkraftverteilungsprofil des vorbestimmten Bilds in einer Hauptabtastrichtung sind.

6. Bilderzeugungseinrichtung (100) nach Anspruch 5, wobei der Bilddatengenerator (11, 17) die Bilddaten des zukünftigen Bilds durch Durchführen, an den beliebigen Bilddaten, einer Gammakorrekturanpassung für einen Leuchtkraftwert als die geschätzten Verschlechterungsinformationen generiert.

7. Bilderzeugungseinrichtung (100) nach einem der Ansprüche 1 bis 6, wobei die Ausgabevorrichtung ein Bildgeber (18) ist, der das zukünftige Bild auf Papier erzeugt.

8. Bilderzeugungseinrichtung (100) nach einem der Ansprüche 1 bis 6, wobei die Ausgabevorrichtung eine Anzeige (13) ist, die das zukünftige Bild anzeigt.

9. Bilderzeugungseinrichtung (100) nach einem der Ansprüche 2 bis 6, umfassend ein Bildlesegerät (20), das das vorbestimmte Bild liest, wobei
die Informationserlangungseinheit (11) die Rauschinformationen basierend auf gelesenen Daten erlangt, die durch das Bildlesegerät (20) erlangt werden, das das vorbestimmte Bild liest.

10. Bilderzeugungseinrichtung (100) nach Anspruch 1, umfassend einen Dauerhaftigkeitsinformationsspeicher (14, T11, T12, T13), wo Dauerhaftigkeitsinformationen über eine Komponente, die mit Bilderzeugung in Zusammenhang steht, gespeichert sind, wobei
die Informationserlangungseinheit (11) die geschätzten Verschlechterungsinformationen basierend auf Dauerhaftigkeitsinformationen erlangt, die in dem Dauerhaftigkeitsinformationsspeicher (14, T11, T12, T13) gespeichert sind.

11. Programm, um eine Bilderzeugungseinrichtung (100) zu veranlassen, zu funktionieren als:
eine Informationserlangungseinheit (11) die geschätzte Verschlechterungsinformationen über einen geschätzten Verschlechterungsgrad von Bildqualität eines Bilds erlangt;
ein Bilddatengenerator (11, 17), der, basierend auf den geschätzten Verschlechterungsinformationen, die durch die Informationserlangungseinheit (11) erlangt werden, aus beliebigen Bilddaten Bilddaten eines zukünftigen Bildes generiert, das eine vorhergesagte Bildqualität aufweist; und
eine Bildausgabesteuervorrichtung (11), die eine Ausgabevorrichtung (13, 18) veranlasst, das zukünftige Bild basierend auf den Bilddaten des zukünftigen Bilds auszugeben, die durch den Bilddatengenerator (11, 17) generiert wurden.

## Revendications

1. Appareil de formation d'image (100) comprenant :
un dispositif de sortie (13, 18) ;
une unité d'obtention d'informations (11) qui obtient des informations de détérioration évaluée sur un degré de détérioration évalué d'une qualité d'image d'une image ;
un générateur de données d'image (11, 17) qui, sur la base des informations de détérioration évaluée obtenues par l'unité d'obtention d'informations (11), génère, à partir de données d'image arbitraire, des données d'image d'une future image présentant une qualité d'image prédite ; et
un dispositif de commande de sortie d'image (11) qui amène le dispositif de sortie (13, 18) à sortir la future image sur la base des données d'image de la future image générées par le générateur de données d'image (11, 17).

2. Appareil de formation d'image (100) selon la revendication 1, comprenant une mémoire d'informations de bruit (14, T1, T2, T3) où des informations de bruit sur une image prédéterminée sont accumulées, dans lequel
l'unité d'obtention d'informations (11) obtient les informations de détérioration évaluée sur la base des informations de bruit accumulées dans la mémoire d'informations de bruit (14, T1, T2, T3).

3. Appareil de formation d'image (100) selon la revendication 2, dans lequel les informations de bruit sont une caractéristique de fréquence d'une luminosité de l'image prédéterminée dans une direction de balayage principale ou une direction de balayage secondaire.

4. Appareil de formation d'image (100) selon la revendication 3, dans lequel le générateur de données d'image (11, 17) génère les données d'image de la future image en effectuant, sur les données d'image arbitraire, un filtrage en fréquence adapté aux informations de détérioration évaluée.

5. Appareil de formation d'image (100) selon la revendication 2, dans lequel les informations de bruit sont un profil de distribution de luminosité de l'image prédéterminée dans une direction de balayage principale.

6. Appareil de formation d'image (100) selon la revendication 5, dans lequel le générateur de données d'image (11, 17) génère les données d'image de la future image en effectuant, sur les données d'image arbitraire, une correction de gamma adaptée à une valeur de luminosité comme les informations de détérioration évaluée.

7. Appareil de formation d'image (100) selon l'une quelconque des revendications 1 à 6, dans lequel le dispositif de sortie est un dispositif de formation d'image (18) qui forme la future image sur du papier.

8. Appareil de formation d'image (100) selon l'une quelconque des revendications 1 à 6, dans lequel le dispositif de sortie est un afficheur (13) qui affiche la future image.

9. Appareil de formation d'image (100) selon l'une quelconque des revendications 2 à 6, comprenant un lecteur d'image (20) qui lit l'image prédéterminée, dans lequel
l'unité d'obtention d'informations (11) obtient les informations de bruit sur la base de données de lecture obtenues par le lecteur d'image (20) lisant l'image prédéterminée.

10. Appareil de formation d'image (100) selon la revendication 1, comprenant une mémoire d'informations de durabilité (14, T11, T12, T13) où des informations de durabilité sur un élément lié à une formation d'image sont mémorisées, dans lequel
l'unité d'obtention d'informations (11) obtient les informations de détérioration évaluée sur la base des informations de durabilité mémorisées dans la mémoire d'informations de durabilité (14, T11, T12, T13).

11. Programme pour amener un appareil de formation d'image (100) à fonctionner comme :
une unité d'obtention d'informations (11) qui obtient des informations de détérioration évaluée sur un degré de détérioration évalué d'une qualité d'image d'une image ;
un générateur de données d'image (11, 17) qui, sur la base des informations de détérioration évaluée obtenues par l'unité d'obtention d'informations (11), génère, à partir de données d'image arbitraire, des données d'image d'une future image présentant une qualité d'image prédite ; et
un dispositif de commande de sortie d'image (11) qui amène un dispositif de sortie (13, 18) à sortir la future image sur la base des données d'image de la future image générées par le générateur de données d'image (11, 17).
